# EUROPEAN PATENT SPECIFICATION

(11) **EP 3 460 532 B1**
(45) Date of publication and mention of the grant of the patent: **07.06.2023**
(21) Application number: 17192851.8
(22) Date of filing: 25.09.2017
(51) Int. Cl.: G01V 5/10

(54) **HIGH TEMPERATURE MEMORY LOGGING DEVICE**
HOCHTEMPERATUR-SPEICHERPROTOKOLLIERUNGSVORRICHTUNG
DISPOSITIF D'ENREGISTREMENT DE MÉMOIRE HAUTE TEMPÉRATURE

(43) Date of publication of application: 27.03.2019
(73) Proprietor: ELAF Petroleum Services, P.C. 130 Muscat (OM)
(72) Inventor: Al SALMI, Salim Saif Basher, P.C. 136 Muscat (OM)
(74) Representative: Thiel, Christian

(56) References cited:
- WO-A1-2014/127453
- US-A- 3 859 523
- US-A1- 2002 014 583
- US-A1- 2007 095 096
- US-A1- 2013 261 972

## Description

The invention relates to a high temperature memory logging device for evaluating the hydrocarbon and water contents of a borehole according to claim 1. The device also needs to be pressure resistant.

The evaluation of remaining hydrocarbons in a wellbore is a frequently encountered problem in the oil and gas production industry. There are a number of different approaches including surface and down-hole techniques. Frequently used down-hole techniques are gamma ray and neutron logging.

Neutron logging based on a neutron source and the ratio of count rates at different distances of neutron detectors is a means to get information of the moderation of the emitted neutrons and porosity of a formation surrounding a borehole. Neutrons emitted by the neutron source ingress the surrounding formation and interact with elements contained therein, predominantly hydrogen. Hydrogen is mostly present in the form of water or hydrocarbons, the hydrocarbons (gas and liquid hydrocarbons) being mostly contained in pores of the formation. Neutrons interact with the hydrogen and are scattered back to the detectors, allowing a log of the formation porosity. The logging effect is mostly due to the slowing down of neutrons to thermal or epithermal neutrons by interaction with hydrogen and detection of the thermal and epithermal neutrons by suitable detectors. The data obtained is converted into the so-called hydrogen index.

The hydrogen index HI is defined as the ratio of hydrogen contained in a formation - mostly in form of water or hydrocarbons - to hydrogen in liquid water, the latter being given as 1 (100%). The assumption is that all hydrogen in the formation is contained in pores. Thus, the measured HI in a borehole is related to the porosity of the formation and yields information on the hydrocarbon content for a known porosity. The depth of investigation with a neutron source is several inches.

There are several detectors which can be used, such as ³He detectors.

Oil production in many fields, in particular old fields and heavy oil fields, is frequently stimulated by gas or steam injection, where e.g. saturated steam at high temperature is injected into an oil reservoir. The steam injection technique is particularly suited for production of heavy oil..

When using pressurized steam to enhance the productivity of an oil field, logging data on the availability of hydrocarbons, in exploited fields of the remaining hydrocarbons, in the surrounding formations, as well as on steam quality and heat transfer are desirable. However, conventional down-hole surveillance tools have temperature limitations. Especially, the electronics have to be protected against high temperatures. Conventional logging tools are not suited to withstand high temperatures for the times required to perform a complete logging cycle.

Exploitation of oil fields is frequently done with wells that have a more or less horizontal course. Neutron logging in such lateral boreholes encounters special problems because logging in such a formation requires time. Positioning, moving and retrieving the logging device in/from a horizontal borehole results in additional thermal stress due to a prolonged exposure. In addition, there is a more or less uniform high temperature in horizontal wells, when compared to vertical wells, where there are different temperature zones and gradients.

Therefore, it is an object of the invention to provide a downhole tool for neutron logging that is designed to withstand the temperature and pressure of a field under steam injection and is particularly suited to withstand high temperatures of up to 260°C (500°F) for up to 5 hrs.

A device that is insulated against heat from the outside is, however, not sufficient. There remains the problem of internal heat production. Memory logging tools normally comprise a battery, which is necessary to provide the power for the electronic equipment and additional electric elements. Batteries that provide power to such additional elements also produce heat. In normal logging tools, this heat will be released through the container wall adjacent to the battery. However, a device insulated to the outside also insulates the battery which means that the heat released by the battery will heat up the inside of the container. This will affect the performance of any electronics within the logging tool.

It is therefore another object of the invention to provide means to protect the sensitive electronic means against heat generated inside the device, e.g. by the battery.

These objectives are met with a device, according to claim 1, as addressed above, where the container is an insulating flask designed to withstand a temperature of up to 260°C (500°F) for up to 5 hrs and wherein at least one heat sink separates the electronics section from the battery.

US2002014583 discloses a high temperature memory logging device for evaluating the hydrocarbon and water contents of a borehole, the device having the form of a tube-like container, comprising a head section, a neutron source section, two neutron detectors, an electronics section with memory modules and a power supply in the form of a battery, a Dewar flask and at least one heat sink. The heat sink is mounted up-hole from the neutron-gamma detector having an electronic unit and the electronic assembly is mounted up-hole of the heat sink. Within the assembly 52, microprocessor 44, memory circuit 46 and battery 48 are located in an up-hole direction in that order.

US3859523 discloses a Dewar flask containing a heat sink flanking the electronics section allowing the unit to operate for approximately 10 hours at 138°C (281°F) in a borehole at 260°C (500°F).

US2007095096 discloses different cooling mechanisms for the electronic components.

The high temperature memory logging device of the present invention is designed for evaluating the hydrocarbon and water contents in a formation surrounding a borehole. The device is in the form of a tube-like container, the container wall surrounding the elements of the logging device. The main elements are a head, a neutron source section, at least one detector section, an electronics section with memory modules and a power supply in the form of a battery and electronic means for controlling the device's functions and for data processing. These elements are more or less conventional. The heat flux inside the insulating flask is controlled by at least one heat sink.

In order to increase the temperature and pressure capabilities of the device, the container has the form of an insulating flask made from steel. Suitable steel varieties are known in the art. Such insulating flask can be designed to withstand a temperature of up to 260°C (500°F) for up to 5 hrs.

In order to provide this high temperature and pressure capability, the flask is made of stainless steel and designed according to the Dewar principle, i.e. the container has two walls defining an inner space which is evacuated. Dewar containers, mostly made from glass, are frequently used in laboratories and households to keep liquids cold or hot.

In order to compensate for the heat produced by the battery, the device of the invention also includes at least one heat sink which separates the electronics section with the memory device from the battery. There are at least two heat sinks surrounding the battery at the up-hole and down-hole ends. The heat sinks can be made from any material that has a sufficient high heat capacity, metal such as steel being the preferred material. The heat sinks are in the form of massive blocks which are able to absorb the heat produced by the battery for a longer time.

The device of the invention comprises two neutron detectors, one long space detector and one short space detector, the long space detector being located up-hole from the short space detector and neutron source, in that sequence. The arrangement of a long space and a short space detector allows for a more precise compensated measurement of the porosity, expressed as the hydrogen index of downhole formations.

The device of the invention comprises two neutron detectors, which can detect either thermal or epithermal neutrons. Measurements of thermal neutrons require a liquid-filled borehole, epithermal measurements can be made in air or gas filled boreholes. Of course, the present device may comprise two detector pairs for thermal and epithermal measurements.

The neutron source is a conventional one, e.g. one based on Americium and Beryllium, 241Am and 9Be, which results in a continuous flow of fast neutrons. The fast neutrons are released into the formation where they - after several collisions with other elements - are scattered back to the detectors and provide the desired porosity information.

The detectors may also be conventional and are preferably based on ³He, which is suitable to capture thermal and epithermal neutrons. The electronics part of the device converts the data captured by the detectors into porosity data and the hydrogen index of the formation, the results being stored in the memory module of the device.

The electronics section comprises the memory modules, the electronic devices for data processing and for controlling the device's functions.

The device of the invention comprises a head, preferably a bullnose head at the down-hole end. The head section houses the neutron source, which emits neutrons to one side. The neutron source is arranged in the device such that it can be removed for replacement.

Since neutron logging data are temperature sensitive, the retrieved data need to be compensated by a (known) temperature factor. In order to do the compensation, the device may also comprise a temperature sensor, which is arranged in the head section (outside the insulation) close to the neutron source.

The device of the invention has at its tail end (up-hole end) an insulating plug and a connector for a logging cable and/or a drilling rod. The device can be lowered into a vertical well by means of a cable. In horizontal boreholes, it is necessary to make use of a drilling rod, a drill pipe to push the tool towards 'total depth' of the well or a coiled tubing, which is flexible enough to guide the logging device over a long distance in vertical and/or horizontal boreholes, or conventional wirelines or slicklines.

The device of the invention is particularly suited for use in a high temperature surrounding, e.g. in the presence of saturated steam with temperatures of up to 260°C (500°F).

Such conditions prevail e.g. in fields under thermal stimulation for enhanced oil recovery. The device may be used in vertical as well as horizontal wells.

In addition the device of the present invention is well suited to provide information on the steam quality and pressure in a steam injected well. Steam injection into an oil bearing formation results in a heat transfer into the formation and mobilizes hydrocarbons, especially heavy crude oil.

Steam quality plays an important role since heat transfer from steam is much more effective than from water. Down-hole monitoring of steam quality therefore is an issue. Liquid water and steam have different HIs, the HI of steam being much lower and highly dependent on its pressure. Since this dependency is known, the present device allows direct down-hole measurements of steam quality and pressure in a steam injection well.

Moreover, the logging device of the invention may be used in carbon dioxide flooding projects to provide data on remaining oil saturation.

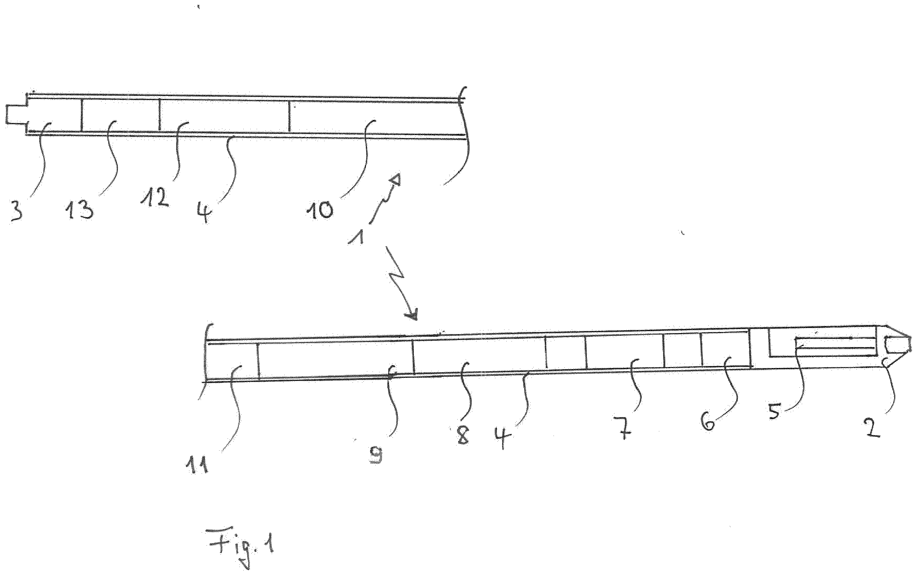

The device of the invention is illustrated by the attached drawing showing a preferred embodiment. The high temperature memory logging device 1 according to the attached drawing has a head section 2 with a bullnose head and a tail section 3 with a connector. The bullnose head section 2 is directed down-hole and the connector up-hole and connected to a drilling rod or coil tubing, when the device is in use.

The device has a housing 4, which is made from stainless steel, as the bullnose head section 2 and the top (up-hole) tail section 3. Specifically, the tube-like housing 4 is double-walled in accordance with the principles of a Dewar container, the space between the two walls being evacuated for heat insulation.

Inside the container or flask 4 there is arranged a neutron source 5 in a separate container, which is removable. The neutron source 5 is integrated into the head section 2. The bullnose head section 2 is not integrated into the flask 4 but forms a separate part protruding from flask 4. The bullnose head section may also comprise a temperature sensor (not shown).

Within flask 4 there is arranged a moderator 6 for moderating electrons emitted by the neutron source 5, a short space detector 7 and a long space detector 8, which are separated from each other by electronic elements. Subsequent, thereto, in direction of the up-hole end of the device, there is arranged the electronics section 9, which contains all elements for data processing, data storing and controlling the device's functions.

The electronics section 9 is separated from the battery 10 by a first heat sink 11 for insulation of the heat that is produced by the battery. A second heat sink 12 is arranged at the up-hole tail end of battery 10. The heat sinks 11 and 12 absorb heat produced by the battery and prevent the sensitive parts of the device from becoming overheated in a hot surrounding. The heat sinks are made from conventional steel and are in contact with the inner walls of container 4, also in order to minimize heat transfer over the inner wall.

For insulation of the open tail end (up-hole end) of the device, there is an insulating plug 13. The plug prevents heat from the surroundings to invade the device from the up-hole end.

## Claims

1. A high temperature memory logging device for evaluating the hydrocarbon and water contents of a borehole, the device (1) having the form of a tube-like container (4) comprising a head section, a neutron source section (5), two neutron detectors (7, 8), an electronics section (9) with memory modules and a power supply in the form of a battery (10),
wherein
the container (4) is an insulating flask and comprises at least one heat sink, **characterized in that** the insulating flask is designed to withstand a temperature of up to 260°C (500°F) for up to 5 hrs, and comprises two heat sinks (11, 12), a first heat sink (11) separating the electronics section (9) from the battery (10) and a second heat sink (12) being located at the up-hole tail and of the battery (10), the first (11) and second heat sinks (12) flanking the battery (10).

2. The device of claim 1, **characterized in that** the heat sinks (11,12) are massive steel blocks that are in contact with the inner walls of the container (4).

3. The device of claim 1 or 2, **characterized in that** the insulating flask is a Dewar flask made from steel, the space within the flask being evacuated.

4. The device of claim 1, 2 or 3 **characterized in that** it comprises two detectors, one long space detector and one short space detector.

5. The device of any of claims 1 to 4, **characterized in that** the neutron source is an Am/Be source in the head section.

6. The device of claim 5, **characterized in that** the detector is a ³He detector.

7. The device of any of claims 1 to 6, **characterized by** an insulating element at the up-hole end of the flask.

8. The device of any of claims 1 to 7, **characterized by** a connector for a logging cable and/or a drilling rod at the up-hole end of the flask.

9. The device of any of claims 1 to 8, **characterized by** an exchangeable bullnose head in the head section.

10. The device of any of claims 1 to 9, **characterized in that** it comprises a temperature sensor in the head section.

11. Use of the device of any of claims 1 to 10 in a high temperature high pressure surrounding for evaluating the hydrocarbon and water content in a borehole.

12. The use according to claim 11, **characterized in that** the device is used in a borehole flooded with pressurized steam in thermal stimulating processes.

13. The use according to claims 11 or 12 at a temperature ≥ 260°C (500°F).

14. Use according to any of claims 11 to 13 in a horizontal borehole.

## Patentansprüche

1. Eine Hochtemperatur-Speicherprotokollierungsvorrichtung zur Auswertung des Kohlenwasserstoff- und Wassergehalts eines Bohrlochs, wobei die Vorrichtung (1) die Form eines röhrenförmigen Behälters (4) hat umfassend einen Kopfteil, einen Neutronenquellenteil (5), zwei Neutronendetektoren (7, 8), einen Elektronikteil (9) mit Speichermodulen und eine Stromversorgung in der Form einer Batterie (10), wobei der Behälter (4) ein Isolierkolben ist und mindestens einen Kühlkörper umfasst, **dadurch gekennzeichnet,**
**dass** der Isolierkolben ausgelegt ist einer Temperatur von bis zu 260°C (500°F) für bis zu 5 Stunden standzuhalten und zwei Kühlkörper (11, 12) umfasst, ein erster Kühlkörper (11) trennt den Elektronikteil (9) von der Batterie (10) und ein zweiter Kühlkörper (12) befindet sich am oben-Loch Endbereich der Batterie (10), der erste (11) und der zweite Kühlkörper (12) flankieren die Batterie (10).

2. Vorrichtung nach Anspruch 1, **dadurch gekennzeichnet, dass** die Kühlkörper (11, 12) massive Stahlblöcke sind, die mit den Innenwänden des Behälters (4) in Kontakt sind.

3. Vorrichtung nach Anspruch 1 oder 2, **dadurch gekennzeichnet, dass** der Isolierkolben ein Dewar-Kolben gemacht aus Stahl ist, wobei der Raum innerhalb des Kolbens evakuiert ist.

4. Vorrichtung nach Anspruch 1, 2 oder 3, **dadurch gekennzeichnet, dass** sie zwei Detektoren umfasst, einen Langraumdetektor und einen Kurzraumdetektor.

5. Vorrichtung nach einem der Ansprüche 1 bis 4 **dadurch gekennzeichnet, dass** die Neutronenquelle eine Am/Be-Quelle in dem Kopfteil ist.

6. Vorrichtung nach Anspruch 5, **dadurch gekennzeichnet, dass** der Detektor ein ³He Detektor ist.

7. Vorrichtung nach einem der Ansprüche 1 bis 6, **gekennzeichnet durch** ein isolierendes Element am oben-Loch Ende des Kolbens.

8. Vorrichtung nach einem der Ansprüche 1 bis 7, **gekennzeichnet durch** einen Verbinder für ein Protokollierungskabel und/oder eine Bohrstange am oben-Loch Ende des Kolbens.

9. Vorrichtung nach einem der Ansprüche 1 bis 8, **gekennzeichnet durch** einen austauschbaren Bullnose-Kopf in dem Kopfteil.

10. Vorrichtung nach einem der Ansprüche 1 bis 9, **dadurch gekennzeichnet, dass** sie einen Temperatursensor in dem Kopfteil aufweist.

11. Verwendung der Vorrichtung nach einem der Ansprüche 1 bis 10 in einer Hoch-Temperatur-Hoch-Druck-Umgebung zur Auswertung des Kohlenwasserstoff- und Wassergehalts eines Bohrlochs.

12. Verwendung nach Anspruch 11, **gekennzeichnet dadurch, dass** die Vorrichtung in einem mit Druckdampf gefluteten Bohrloch in thermischen Stimulationsprozessen verwendet wird.

13. Verwendung nach Anspruch 11 oder 12 bei einer Temperatur ≥ 260°C (500°F).

14. Verwendung nach einem der Ansprüche 11 bis 13 in einem horizontalen Bohrloch.

## Revendications

1. Dispositif d'enregistrement de mémoire haute température pour évaluer les contenu en hydrocarbures et en eau d'un trou de forage, le dispositif (1) ayant la forme d'un récipient (4) de type tube comprenant une section de tête, une section de source de neutrons (5), deux détecteurs de neutrons (7, 8), une section électronique (9) avec des modules de mémoire et une alimentation électrique sous la forme d'une batterie (10), dans lequel le récipient (4) est un piston isolant et comprend au moins un dissipateur de chaleur, **caractérisé en ce**
**que** le piston isolant est conçu pour résister à une température allant jusqu'à 260°C (500°F) jusqu'à 5 heures, et comprend deux dissipateurs de chaleur (11, 12), un premier dissipateur de chaleur (11) séparant la section électronique (9) de la batterie (10) et un deuxième dissipateur de chaleur (12) situé à la haut-trou zone terminale de la batterie (10), le premier (11) et le deuxième (12) dissipateurs de chaleur flanquer la batterie (10).

2. Dispositif de la revendication 1, **caractérisé en ce que** les dissipateurs de chaleur (11, 12) sont des blocs d'acier massifs qui sont en contact avec les parois internes du récipient (4).

3. Dispositif de la revendication 1 ou 2, **caractérisé en ce que** le piston isolant est un piston Dewar en acier, l'espace à l'intérieur du piston étant évacué.

4. Dispositif de la revendication 1, 2 ou 3 **caractérisé en ce qu'**il comprend deux détecteurs, un détecteur d'espace long et un détecteur d'espace court.

5. Dispositif de l'une quelconque des revendications 1 à 4, **caractérisé en ce que** le neutron source est une source Am/Be dans la section tête.

6. Dispositif de la revendication 5, **caractérisé en ce que** le détecteur est un ³He détecteur.

7. Dispositif de l'une quelconque des revendications 1 à 6, **caractérisé par** un isolant élément situé à la haut-trou zone terminale du piston.

8. Dispositif de l'une quelconque des revendications 1 à 7, **caractérisé par** un connecteur pour un cable d'enregistrement et/ou tige de forage à la haut-trou zone terminale du piston.

9. Dispositif de l'une quelconque des revendications 1 à 8, **caractérisé par** un échangeable tête de bullnose dans la section de tête.

10. Dispositif de l'une quelconque des revendications 1 à 9, **caractérisé en ce qu'**il comporte un capteur de température dans la section de tête.

11. Utilisation du dispositif de l'une quelconque des revendications 1 à 10 dans une haute température haute pression environnante pour évaluer les contenu en hydrocarbures et en eau d'un trou de forage.

12. Utilisation selon la revendication 11, **caractérisé en ce que** le dispositif est utilisé dans un forages inondés de vapeur pressurisée dans des procédés de stimulation thermique.

13. Utilisation selon les revendications 11 ou 12 à une température ≥ 260°C (500°F).

14. Utilisation selon l'une quelconque des revendications 11 à 13 dans un forage horizontal.
